# FASCICULE DE BREVET EUROPEEN

(11) **EP 3 265 974 B1**
(45) Date de publication et mention de la délivrance du brevet: **22.01.2025**
(21) Numéro de dépôt: 17727658.1
(22) Date de dépôt: 12.05.2017
(51) Int. Cl.: G06Q 20/20, G07G 1/14, G07G 1/00, G06Q 30/02, G06Q 30/0251

(54) **PROCÉDÉ DÉCLENCHEUR D'ACTIONS COMPLÉMENTAIRES MIS EN OEUVRE PAR UN DISPOSITIF ÉLECTRONIQUE COOPÉRANT AVEC UN PÉRIPHÉRIQUE**
KOMPLEMENTARE AKTIONEN AUSLÖSENDES VERFAHREN IMPLEMENTIERT DURCH EINE ELEKTRONISCHE VORRICHTUNG DIE MIT EINEM PERIPHERALGERÄT ZUSAMMENWIRKT.
COMPLEMENTARY ACTIONS TRIGGERING METHOD IMPLEMENTED BY AN ELECTRONICAL DEVICE COOPERATING WITH A PERIPHERAL APPARATUS

(30) Priorité: 26.05.2016 FR 1654736
(43) Date de publication de la demande: 10.01.2018
(73) Titulaire: CASHMAG, 83390 Cuers (FR)
(72) Inventeur: GERVAIS, Philippe, 83390 CUERS (FR); VARTANIAN, Stéphane, 83390 CUERS (FR)
(74) Mandataire: Brun, Philippe Alexandre Georges
(86) Numéro de dépôt international: PCT/FR2017/051152
(87) Numéro de publication internationale: WO 2017/203125

(56) Documents cités:
- EP-A2- 1 580 704
- WO-A1-00/49547
- JP-A- 2014 006 856
- US-A1- 2004 044 575
- US-A1- 2006 010 137
- US-A1- 2006 261 159
- US-A1- 2013 314 725
- US-A1- 2014 019 242
- US-A1- 2020 034 808
- US-B1- 10 548 022
- US-B1- 7 555 461
- US-B1- 7 555 461

## Description

L'invention concerne un procédé pour déclencher une ou plusieurs actions complémentaires à celles déclenchées par un procédé d'application mis en œuvre par un dispositif électronique, tel qu'à titre d'exemple d'application préféré non limitatif, une caisse enregistreuse coopérant avec un ou plusieurs périphériques. Selon l'exemple d'application précédemment mentionné, de tels périphériques peuvent avantageusement consister en un monnayeur ou encore un serveur distant de paiement électronique. L'invention permet ainsi d'ajouter des fonctionnalités à un logiciel informatique agréé ou développé par un tiers, auquel il n'est pas pertinent de demander à l'éditeur une mise à jour, notamment au gré des évolutions des périphériques. Selon l'exemple d'application préféré, un tel logiciel est un logiciel d'encaissement prévu pour être installé sur un dispositif électronique, proche d'un ordinateur personnel, afin de transformer celui-ci en caisse enregistreuse. Plus généralement, l'objectif de l'invention consiste in fine à apporter de nouvelles fonctionnalités ou à supplanter des fonctionnalités existantes provoquées par la mise en œuvre d'instructions d'un programme d'ordinateur, sans devoir mettre à jour ledit programme d'ordinateur. L'invention concerne en outre un système permettant de mettre en œuvre un tel procédé.

Dans la suite du document, nous nommerons « périphérique » ou « périphérique électronique communicant » toute entité matérielle et/ou électronique pouvant interagir avec un dispositif électronique mettant en œuvre un procédé selon l'invention. A titre d'exemple non limitatif, un tel périphérique peut consister en un deuxième dispositif électronique similaire à un dispositif adapté selon l'invention ou encore une plateforme électronique distante communiquant via un réseau de communication, par exemple Internet ou un intranet.

Un logiciel informatique est un ensemble de règles relatives au fonctionnement d'un ensemble de traitements de données. Il est généralement constitué d'un ou plusieurs programmes d'ordinateur. Un programme d'ordinateur consiste, quant à lui, en une séquence d'instructions interprétables et/ou exécutables par une unité de traitement d'un dispositif électronique, qui spécifie étape par étape des opérations ou traitements que ladite unité de traitement va ainsi effectuer pour obtenir un résultat. Lesdites instructions sont communément interprétées ou exécutées par une unité de traitement comprenant généralement un ou plusieurs processeurs ou microcontrôleurs notamment. Lesdites instructions sont préalablement inscrites dans une mémoire de programmes accessible en lecture par lesdits processeurs ou microcontrôleurs.

Un dispositif électronique, dont l'unité de traitement exécute de telles instructions, comporte ou coopère en outre avec d'autres éléments électroniques, tels qu'à titre d'exemples, une ou plusieurs mémoires de données, des interfaces homme-machine de consigne et de restitution. La mise en œuvre d'un programme d'ordinateur par les ressources matérielles d'un tel dispositif électronique est parfois régie par un ensemble de services offerts par un système d'exploitation, consistant lui-même en un programme d'ordinateur dont les instructions sont implantées dans l'une desdites mémoires dudit dispositif. Lesdits services permettent de faciliter l'accès ou l'exploitation desdites ressources matérielles pour tout programme d'ordinateur d'application, dont les instructions sont également implantées dans l'une des mémoires dudit dispositif.

Il existe différents systèmes d'exploitation. Certains sont normalisés, tels qu'à titre d'exemples « Android » et « Linux », d'autres au contraire sont spécifiques à un dispositif électronique particulier ou sont dits « propriétaires », c'est-à-dire qu'ils répondent à un cahier des charges spécifique. Les services offerts par les différents systèmes d'exploitation sont propres à chacun d'eux. Ainsi, pour mettre en œuvre un programme d'ordinateur par un dispositif électronique déterminé, ledit programme doit être agencé pour coopérer avec le système d'exploitation qui est d'ores et déjà implanté en mémoire dudit dispositif électronique déterminé. Ainsi il est fréquent qu'une mise à jour requise pour un système d'exploitation, par exemple pour coopérer avec de nouvelles ressources ou périphériques, nécessite un nouveau développement total ou partiel d'un programme d'ordinateur agencé pour fonctionner selon une version antérieure dudit système d'exploitation. Ainsi une nouvelle édition dudit programme s'impose.

Un programme d'ordinateur est donc limité par ses fonctionnalités imposées et développées par son éditeur, et par le type de dispositif électronique sur lequel il est destiné à être mis en œuvre.

A titre d'exemple d'application préféré mais non limitatif, l'invention sera décrite au travers d'un exemple d'application relatif à la gestion des encaissements d'un établissement de vente à emporter, tel qu'une boulangerie ou une pharmacie.

L'encaissement, fruit d'une transaction entre un client et un établissement de vente à emporter, s'effectue généralement au moyen d'une caisse enregistreuse manipulée par un employé dudit établissement, tel qu'à titre d'exemple non limitatif, un caissier. Une caisse enregistreuse permet de garder une trace de chaque transaction. Elle comporte généralement une interface homme-machine de consigne telle qu'un clavier physique ou numérique, une machine à calculer, un tiroir caisse, un afficheur ou plus généralement une interface homme-machine de restitution et une imprimante pour émettre notamment un reçu à un client. Les progrès technologiques font qu'aujourd'hui, des constructeurs de caisses enregistreuses produisent des caisses enregistreuses s'apparentant à des ordinateurs mettant en œuvre respectivement des logiciels d'encaissement présentant de nombreuses fonctionnalités. A titre d'exemple non limitatif, un tel logiciel d'encaissement permet non seulement de tracer tout encaissement, assurant ainsi la facturation des transactions, mais contribue également à la gestion de stocks de ventes et/ou d'achats ainsi qu'aux commandes clients. Les logiciels d'encaissements connus coopèrent avec différents périphériques d'encaissement, tels qu'un tiroir caisse ou un terminal de paiement électronique. La coopération entre un tel logiciel d'encaissement et les périphériques d'encaissement disponibles pour une caisse enregistreuse a généralement été prévue et intégrée lors du développement dudit logiciel sous la forme d'instructions de programmes spécifiques.

Toutefois, les périphériques d'encaissements évoluent selon les us et coutumes des clients et/ou des utilisateurs des caisses enregistreuses, ainsi qu'avec l'essor de moyens ou modes de paiement. A titre d'exemples, pour augmenter la sécurité des établissements de vente à emporter et y réduire le risque de tentatives d'agression visant à dévaliser l'établissement, mais aussi par mesure d'hygiène, en déchargeant le personnel d'un établissement d'une manipulation directe d'espèces, des constructeurs de périphériques ont développé de nouveaux périphériques d'encaissement dits « monnayeurs ». Un tel monnayeur permet à un caissier d'un établissement de vente à emporter, de ne pas être en contact direct avec des espèces émanant des clients. En effet, lors d'une transaction, le client lui-même insère directement ses pièces de monnaie ou billets de banque dans le monnayeur. Ce dernier se charge éventuellement de rendre le change au client via un réceptacle idoine. Un caissier est ainsi dispensé de tout contact avec la monnaie. La gestion de la caisse est en outre simplifiée. De plus, le monnayeur étant généralement un automate sécurisé, il est beaucoup plus difficile à vandaliser qu'un simple tiroir caisse.

Les moyens de paiement sont aussi en constante évolution. On peut, par exemple, observer depuis plusieurs années l'apparition de plateformes de paiement en ligne, telles qu'à titre d'exemple non limitatif l'opérateur « Paypal ». De tels périphériques d'encaissement non-conventionnels ne sont généralement pas pris en compte lors du développement d'un logiciel d'encaissement, notamment si ledit logiciel est antérieur à l'avènement dudit périphérique d'encaissement non-conventionnel. Les caisses enregistreuses, découlant de la mise en œuvre d'un tel logiciel, peuvent donc ne pas être en capacité d'offrir un mode de paiement devenu populaire, au risque de déplaire à la clientèle. Pour corriger ce manque, le logiciel d'encaissement doit être modifié. En effet, c'est audit logiciel d'encaissement de prévoir et supporter une communication entre un nouveau périphérique et ladite caisse enregistreuse mettant en œuvre ledit logiciel. Dans la cas d'un nouveau mode de paiement s'appuyant sur une plateforme de paiement en ligne, c'est au logiciel d'encaissement de supporter le protocole de communication requis entre ladite caisse enregistreuse et le nouveau périphérique d'encaissement que constitue ladite plateforme de paiement en ligne.

Lorsque des modalités d'interaction entre un périphérique d'encaissement et une caisse enregistreuse n'ont pas été préalablement prévues lors du développement du logiciel d'encaissement implanté dans ladite caisse, cette dernière peut mettre en œuvre des instructions de programme d'un logiciel tiers appelé couramment « pilote » ou « driver » selon une terminologie anglo-saxonne. On peut ainsi, à l'instar d'une installation d'une nouvelle imprimante coopérant avec un ordinateur personnel, permettre à la caisse enregistreuse de reconnaître un nouveau périphérique d'encaissement et élaborer des messages ou requêtes à destination de celui-ci. Toutefois, les éditeurs de tels logiciels pilotes ne développent pas toujours des versions compatibles avec les services offerts respectivement par les systèmes d'exploitation mis en œuvre par des caisses enregistreuses. Pour pallier à cette difficulté, une variante pourrait consister à développer et insérer dans le logiciel d'encaissement les instructions de programme nécessaires pour mettre en œuvre une communication avec un nouveau périphérique d'encaissement. L'inconvénient de cette méthode réside dans le fait que les protocoles de communication entre les différents périphériques d'encaissements et les caisses enregistreuses, mettant en œuvre des logiciels d'encaissement connus, ne sont pas normalisés. L'évolution ou l'apparition d'un mode de paiement est donc généralement synonyme de modifications des logiciels d'encaissement implantés dans les caisses enregistreuses. Ces solutions sont donc au final généralement coûteuses et limitent grandement le choix de périphériques exploitables par de telles caisses enregistreuses. Ce problème d'interopérabilité restreinte se retrouve également dans d'autres contextes applicatifs que l'encaissement de contrepartie financière. Il suffit que des dispositifs électroniques adaptés pour mettre en œuvre un logiciel ou procédé d'application déterminé, voire agréé ou certifié, soit en situation de devoir assurer une coopération avec un ou plusieurs périphériques en continuelle évolution. Autres exemples de systèmes permettant l'utilisation d'un périphérique rajouté et non supporté par un dispositif électronique mettant en œuvre un procédé d'application d'encaissement sont connus des documents EP 1 580 704 A2, US 2004/044575 A1, US 2013/314725 A1, US 2006/010137 A1, et US 2006/261159 A1.

L'invention permet de répondre de manière particulièrement efficace à tout ou partie des inconvénients soulevés par les solutions précédemment évoquées. L'invention propose pour cela un procédé permettant de déclencher des actions complémentaires à celles provoquées par la mise en œuvre d'un programme d'application implanté sur un dispositif électronique sans pour autant développer à nouveau ledit programme d'application.

Un tel procédé particulièrement innovant s'appuie et exploite notamment la restitution de contenus, par exemple graphiques, réalisée par ledit programme d'application via une interface homme-machine de restitution tel qu'un écran ou autre moyen équivalent, pour interpréter une consigne transmise par l'utilisateur via une interface homme-machine de consigne, via un dispositif de pointage tel une souris ou un clavier. Du contenu délivré à l'utilisateur, le procédé selon l'invention peut déterminer le déroulé et donc la sémantique à associer à une consigne de l'utilisateur.

L'invention propose également un système comprenant un dispositif électronique adapté pour mettre un œuvre un tel procédé déclencheur d'actions complémentaires conforme à l'invention et coopérant avec un ou plusieurs périphériques.

Parmi les nombreux avantages apportés par l'invention, nous pouvons mentionner qu'un système conforme à l'invention permet de rendre un dispositif électronique, mettant en œuvre un procédé d'application déterminé, apte à coopérer avec un nouveau périphérique électronique communicant, sans pour autant modifier le procédé d'application ou installer un nouveau logiciel pilote susceptible de provoquer des disfonctionnements dudit procédé ou du dispositif électronique qui le met en œuvre. L'invention permet en outre de s'affranchir de tout ajout de matériel complémentaire destiné à traduire des commandes ou informations à destination ou en provenance d'un tel nouveau périphérique. Ainsi, un utilisateur d'un tel dispositif électronique n'est pas contraint dans ses choix, lors de l'acquisition d'un périphérique, par la compatibilité dudit périphérique avec un logiciel d'application déjà implanté sur ledit dispositif électronique. L'invention permet d'offrir une solution simple, ne nécessitant aucune évolution du logiciel d'application, aucune évolution logicielle et/ou matérielle dudit périphérique, aucune modification matérielle du dispositif mettant en œuvre ledit logiciel d'application. L'invention rend ainsi virtuellement ledit logiciel d'application, et a fortiori le dispositif mettant en œuvre celui-ci, apte à opérer tout périphérique, quand bien même l'exploitation de ce dernier n'était pas prévue lors du développement dudit logiciel d'application.

En effet, selon un mode préféré de réalisation de l'invention, un dispositif électronique, par exemple une caisse enregistreuse, est uniquement adapté par le chargement des instructions d'un programme d'ordinateur indépendant structurellement du logiciel d'application d'ores et déjà implanté dans le dispositif électronique. L'exécution desdites instructions de programme provoque la mise en œuvre d'un procédé déclencheur d'actions complémentaires conforme à l'invention. Ledit procédé selon l'invention est mis en œuvre prioritairement par le dispositif électronique, potentiellement sans que l'utilisateur du dispositif ne s'en aperçoive, afin d'utiliser des consignes transmises par une interface homme-machine de consigne dudit dispositif électronique, en réponse à une invitation du procédé d'application, pour provoquer la réalisation d'actions complémentaires, par exemple le pilotage d'un nouveau périphérique, avantageusement à la lumière d'éléments contextuels restitués par une interface homme-machine de restitution dudit dispositif sous l'action dudit procédé d'application. Le procédé déclencheur d'actions complémentaires n'est pas intrusif dans le procédé d'application régi par ledit logiciel d'application. L'invention permet en outre d'offrir un dispositif électronique évolutif, apte à coopérer avec une multitude de périphériques, tels qu'à titre d'exemples non limitatifs des monnayeurs ou des plateformes de paiement en ligne, sans devoir mettre à jour le logiciel d'application implanté dans ledit dispositif électronique ni même associer ledit dispositif électronique à un appareil ou interface matérielle complémentaire. Contrairement à ce que procure naturellement un logiciel pilote à un logiciel d'application, c'est-à-dire des nouvelles modalités de pilotage d'un périphérique, à partir du moment où ledit logiciel d'application est agencé pour déclencher lui-même la mise en œuvre dudit logiciel pilote, l'invention permet de virtuellement étendre les fonctions offertes par un tel logiciel d'application installé et mis en œuvre par un dispositif électronique adapté selon l'invention, alors que ledit logiciel d'application n'est pas agencé pour cela. L'invention permet une migration virtuelle et naturelle, c'est-à-dire sans étapes de développement, de déverminage, de certification, de tout logiciel d'application développé pour assurer une communication entre un périphérique et un dispositif électronique mettant en œuvre ledit logiciel d'application. Il suffit pour cela d'installer dans ledit dispositif électronique un programme pour déclencher des actions complémentaires selon l'invention, lesdites actions complémentaires étant le fruit d'une interception suivie d'une interprétation de consignes « adressées » au logiciel d'application sans que la mise en œuvre de ce dernier ne soit altérée.

A cette fin, l'invention concerne tout d'abord un procédé déclencheur d'actions complémentaires mis en œuvre par une unité de traitement d'un dispositif électronique, ledit dispositif électronique comportant une mémoire de données, une mémoire de programme et un moyen de communication coopérant avec l'unité de traitement et assurant un mode de communication déterminé au travers d'un réseau de communication, le moyen de communication étant relié à un périphérique d'encaissement pour coopérer avec l'unité de traitement, l'unité de traitement mettant en œuvre un procédé d'application d'encaissement pour exécuter une action en réponse à la mise à disposition d'une donnée de consigne par ladite unité de traitement, la donnée de consigne étant élaborée par une interface homme-machine de consignes coopérant avec l'unité de traitement, ladite donnée de consigne traduisant une interaction entre un utilisateur et ladite interface. Pour déclencher des actions complémentaires à celle prévue par le procédé d'application de paiement, ledit procédé comporte :
- une étape pour détecter la mise à disposition par l'unité de traitement de la donnée de consigne en utilisant un service d'abonnement proposé par l'unité de traitement, ledit service d'abonnement permettant de mettre à disposition de tous les procédés préalablement abonnés audit service d'abonnement ladite donnée de consigne ;
- une étape pour rechercher dans la mémoire de données coopérant avec l'unité de traitement, un enregistrement comportant la valeur de la donnée de consigne ;
- si la mémoire de données comporte un tel enregistrement, ledit procédé comporte :
   o une étape pour requérir la non-distribution de ladite donnée de consigne au procédé d'application d'encaissement ainsi qu'aux autres procédés abonnés audit service d'abonnement par l'unité de traitement ;
   ∘ une étape pour provoquer la mise en œuvre par l'unité de traitement d'une action complémentaire déterminée consistant à :
      ▪ élaborer une requête de pilotage dudit périphérique d'encaissement ;
      ▪ déclencher l'émission de ladite requête de pilotage par les moyens de communication à destination du périphérique, ladite requête comportant des données de pilotage ;
   ∘ une étape pour requérir la distribution de ladite donnée de consigne au procédé d'application d'encaissement et des autres procédés en sollicitant un service idoine de distribution de ladite donnée de consigne auprès de l'unité de traitement une fois l'action complémentaire terminée.

Pour supplanter une action du procédé d'application, l'étape pour requérir la distribution de ladite donnée de consigne au procédé d'application d'encaissement dudit procédé peut consister préalablement à élaborer une nouvelle donnée de consigne.

Pour permettre une restitution, par exemple, graphique et/ou sonore d'un contenu perceptible par l'un des sens de l'utilisateur, la mémoire de données peut comporter une représentation numérique dudit contenu perceptible, dont la restitution par une interface de restitution coopérant également avec ladite unité de traitement, audit utilisateur a été préalablement provoquée par la mise en œuvre du procédé d'application d'encaissement.

Pour interpréter finement la portée d'une interaction de l'utilisateur via l'interface de restitution, l'enregistrement de la mémoire de données comportant la valeur de la donnée de consigne peut comporter en outre la teneur d'une donnée contextuelle d'intérêt. Pour déterminer ladite nature, ledit procédé peut comporter une étape préalable à l'étape pour requérir la non-distribution de ladite donnée de consignes au procédé d'application, pour comparer les teneurs respectives de la représentation numérique du contenu restitué par l'interface de restitution et de la donnée contextuelle d'intérêt, ladite étape pour requérir la non-distribution n'étant mise en œuvre que si ladite étape pour comparer lesdites teneurs de ladite représentation numérique et de ladite donnée contextuelle d'intérêt atteste que ces dernières sont semblables.

Selon l'invention, pour pouvoir mettre en œuvre une ou plusieurs actions complémentaires ladite mémoire de programmes peut comporter des instructions de programme dédiées à une ou plusieurs actions complémentaires. Pour identifier les instructions de programme associées à une action complémentaire déterminée et en déclencher l'exécution ou l'interprétation par l'unité de traitement, l'étape pour provoquer la mise en œuvre d'une telle action complémentaire déterminée peut consister à :
- extraire de l'enregistrement comportant la valeur de la donnée de consigne, un identifiant d'actions complémentaires désignant les instructions de programme dédiées à ladite action complémentaire déterminée au sein de la mémoire de programmes ;
- déclencher l'exécution desdites instructions de programme par l'unité de traitement.

Pour connaître le statut de fonctionnement du périphérique, l'étape pour provoquer la mise en œuvre par l'unité de traitement d'une action complémentaire déterminée peut consister à :
- recevoir via les moyens de communication, un message d'état émis par le périphérique d'encaissement, ledit message d'état comprenant la teneur de données états caractérisant l'état de fonctionnement courant dudit périphérique d'encaissement ;
- décoder ledit message d'état et en extraire la teneur desdites données états ;
- déclencher la restitution de tout ou partie desdites données état par l'interface homme-machine de restitution du dispositif électronique.

Selon un nouvel objet, l'invention concerne un produit programme d'ordinateur comportant des instructions de programme qui, lorsqu'elles sont préalablement enregistrées dans une mémoire de programmes d'un dispositif électronique comportant outre ladite mémoire de programmes, une unité de traitement, une mémoire de données, une interface homme-machine de restitution et de consigne et des moyens de communication assurant un mode de communication déterminé, lesdites mémoires, ladite interface et lesdits moyens de communication coopérant avec ladite unité de traitement, provoquent la mise en œuvre d'un procédé déclencheur d'actions complémentaires, conforme à l'invention.

Selon un troisième objet, l'invention prévoit un dispositif électronique comportant une unité de traitement, une mémoire de données, une mémoire de programmes, une interface homme-machine de restitution et de consigne et des moyens de communication assurant un mode de communication déterminé, lesdites mémoires, ladite interface et lesdits moyens de communication coopérant avec ladite unité de traitement, ledit dispositif électronique étant connecté à un périphérique d'encaissement par le moyen de communication et comprenant un procédé d'application d'encaissement ne supportant pas la communication avec le périphérique d'encaissement, ledit dispositif électronique comporte dans la mémoire de programmes, les instructions d'un produit programme d'ordinateur conforme à l'invention.

Selon un quatrième objet, l'invention prévoit un système comportant au moins un dispositif électronique conforme à l'invention coopérant avec au moins un périphérique d'encaissement.

D'autres caractéristiques et avantages apparaîtront plus clairement à la lecture de la description qui suit se rapportant à un exemple de réalisation donné à titre indicatif et non limitatif et à l'examen des figures qui l'accompagnent parmi lesquelles :
- la figure 1 présente un système d'application préféré conforme à l'invention pour mettre en œuvre un encaissement par un dispositif électronique à partir d'un périphérique d'encaissement ;
- la figure 2 décrit un mode de réalisation préféré d'un procédé déclencheur d'actions complémentaires conforme à l'invention ;
- la figure 3 décrit un mode de réalisation préféré d'un procédé de communication entre un dispositif électronique conforme à l'invention et un périphérique ;
- la figure 4 présente un exemple de contenu « contextuel » restitué sur une interface homme-machine de restitution d'un dispositif électronique et exploité par un procédé déclencheur d'actions complémentaires conforme à l'invention.

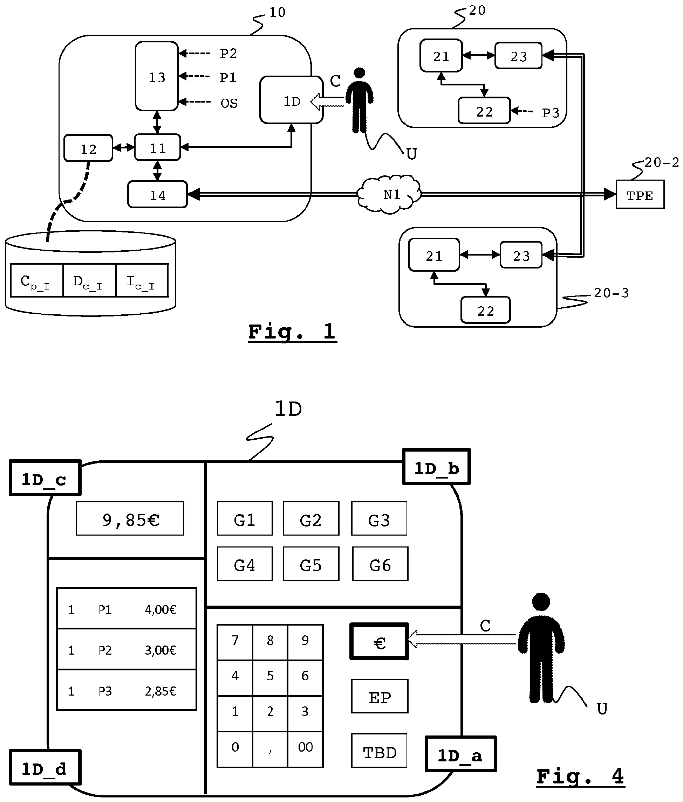

La figure 1 permet de présenter un exemple de système d'encaissement selon l'invention. Un tel système consiste en un dispositif électronique 10 coopérant avec un ou plusieurs périphériques locaux ou distants 20, 20-2, 20-3 communiquant avec le dispositif électronique 10 via une liaison de communication N1 filaire ou sans fil. Un tel dispositif électronique 10 peut comporter des moyens électroniques et/ou informatiques 11 aptes à mettre en œuvre un procédé d'application A par l'interprétation et/ou l'exécution des instructions de programme d'un premier produit programme d'ordinateur P1, dit « programme d'application », implanté dans une mémoire de programmes 13. De tels moyens 11 peuvent consister en une unité de traitement comprenant un ou plusieurs microprocesseurs ou microcontrôleurs coopérant avec ladite mémoire de programmes 13. Eventuellement, pour mettre en œuvre ledit procédé d'application A, la notion « d'unité de traitement » peut s'étendre selon l'invention, au-delà desdits seuls composants électroniques, à un éventuel système d'exploitation OS également implanté dans la mémoire de programmes 13 et mis en œuvre par lesdits microprocesseurs et/ou microcontrôleurs. Ledit système d'exploitation permet d'offrir des services facilitant la gestion des ressources matérielles, à tout produit programme d'ordinateur mis en œuvre par ladite unité de traitement 11. On peut citer, à titre d'exemples non limitatifs, les systèmes d'exploitations « Windows », « Linux » ou « OS X ». A titre d'exemple préféré et non limitatif, le dispositif électronique 10 selon la figure 1 peut consister en une caisse enregistreuse 10 s'apparentant à un ordinateur personnel adapté, grâce à l'implantation d'un programme d'application dans la mémoire de programme 13 provoquant la mise en œuvre d'un procédé d'application d'encaissement A. Avantageusement, un tel dispositif 10 peut être directement connecté à un réseau électrique ou disposer d'une batterie pour délivrer l'énergie électrique suffisante et nécessaire à son fonctionnement. De son côté, un périphérique électronique communicant 20, 20-2, 20-3 peut consister par exemple en un monnayeur 20, un terminal de paiement électronique 20-2 également connu sous l'acronyme TPE, ou tout autre périphérique d'encaissement 20-3.

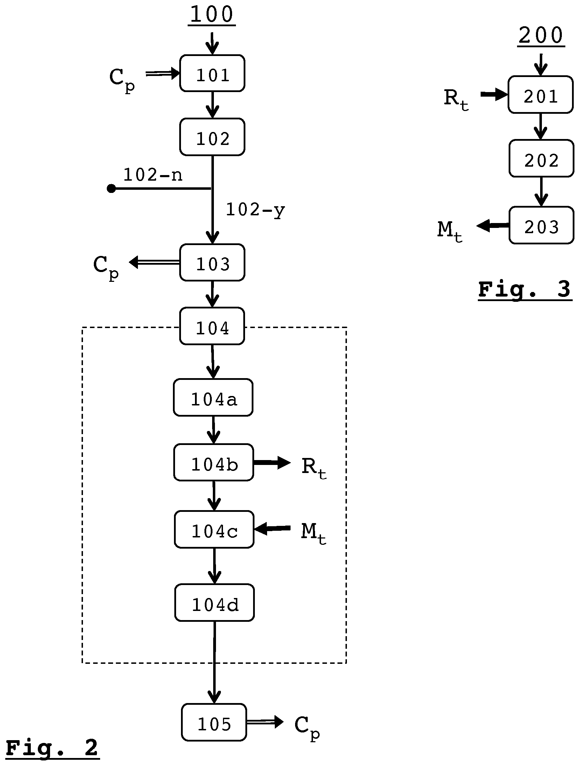

Pour limiter les interventions de maintenance d'un tel système d'encaissement, par exemple lors de l'évolution ou du remplacement du monnayeur 20 ou lors de l'installation d'un nouveau périphérique d'encaissement 20-3, tel qu'à titre d'exemple non limitatif une plateforme de paiement en ligne, l'invention prévoit d'adapter le dispositif électronique 10 dudit système afin qu'il mette en œuvre un procédé déclencheur d'actions complémentaires 100 dont les étapes seront décrites ultérieurement en liaison avec la figure 2. La mise en œuvre d'un tel procédé par l'unité de traitement 11 peut être provoquée lors de l'exécution ou l'interprétation d'instructions de programme d'un deuxième produit programme d'ordinateur P2 enregistrées dans la mémoire de programmes 13 du dispositif électronique 10. Lesdites instructions dudit deuxième programme d'ordinateur P2 peuvent, à titre d'exemple non limitatif, être agencées pour provoquer la mise en œuvre d'une communication entre le dispositif électronique 10 et les périphériques 20, 20-2 et 20-3 selon le mode d'encaissement sélectionné par l'utilisateur U du dispositif 10.

Un dispositif électronique 10 conforme à l'invention comporte ainsi la mémoire de programmes 13 et une mémoire de données 12, coopérant par couplage et/ou par bus filaires représentés par des flèches doubles en figure 1, avec une unité de traitement 11. Lesdites mémoires de données 12 et de programmes 13 peuvent éventuellement ne constituer qu'une seule et même entité physique.

Un dispositif électronique 10 comporte en outre avantageusement une interface homme-machine de consigne et de restitution 1D coopérant avec l'unité de traitement 11. Ladite interface 1D permet à un utilisateur U du dispositif électronique 10 d'interagir avec celui-ci. Une telle interface de consigne et de restitution 1D peut, par exemple, consister en un écran tactile ou se présenter sous la forme de tout autre moyen permettant à un utilisateur U d'interagir avec ledit dispositif électronique 10. Un utilisateur U peut dès lors instruire ledit dispositif 10 de consignes pour procéder, à titre d'exemple non limitatif, à un paiement par carte bancaire ou par espèce. En variante, le dispositif électronique 10 peut comporter deux interfaces homme-machine distinctes pour traduire des consignes émanant d'un utilisateur et pour restituer à celui-ci des contenus graphiques et/ou sonores. Une telle interface de consigne peut consister en un clavier, un microphone, une souris ou tout autre dispositif de pointage. De son côté, une telle interface de restitution peut consister en un écran ou un haut-parleur de sorte qu'un utilisateur puisse voir ou entendre et ainsi percevoir un contenu numérique à l'aide de l'un de ses sens.

Parmi différents types d'éléments ou contenus graphique et/ou sonore, ladite interface 1D permet de restituer des données que nous qualifierons de « données contextuelles ». De telles données contextuelles sont produites par l'unité de traitement 11 du dispositif 10 et restituées par l'interface de restitution 1D lors de la mise en œuvre du procédé d'encaissement. A titre d'exemple non limitatif, ledit procédé d'encaissement peut comporter une étape pour provoquer une restitution graphique et/ou sonore de données contextuelles, telles que des éléments d'affichage et/ou de questionnement sonore, invitant l'utilisateur U à interagir avec ledit dispositif 10. Ces données contextuelles permettent de déterminer le stade de fonctionnement du procédé d'encaissement ou l'étape courante de celui-ci mise en œuvre lors de la restitution desdites données contextuelles. Comme nous le verrons ultérieurement, l'invention peut avantageusement tirer profit desdites données contextuelles restituées sur l'interface de restitution et de consigne 1D pour interpréter ou conférer une sémantique non ambiguë à une consigne émanant de ladite interface 1D.

De telles données contextuelles restituées sur l'interface homme-machine de restitution 1D peuvent, à titre d'exemples correspondre à un icône de consigne ou à toute autre information interprétable par un utilisateur U, telles que celles représentées en liaison avec la figure 4. Selon cet exemple non limitatif une telle interface de restitution 1D restitue des éléments de contenus graphiques sous la forme d'icônes de consignes 1D_a permettant de sélectionner un moyen de paiement ou de saisir le prix de vente d'une marchandise. De tels icônes peuvent, par exemple, représenter et/ou symboliser un pavé numérique et/ou des moyens de paiement tel qu'à titre d'exemples un encaissement en espèces représenté par le symbole « € », un moyen de paiement électronique représenté par l'abréviation « EP » ou tout autre moyen de paiement représenté par l'acronyme « TBD ». D'autres éléments graphiques 1D_b peuvent permettre de représenter des marchandises G1, G2, etc. Un icône G1 peut, à titre d'exemple non limitatif, décrire un pictogramme ou un mot caractérisant une marchandise déterminée. Par exemple un tel mot peut être le mot « baguette » en langue française. Une telle interface de restitution 1D peut en outre restituer des icônes de restitution 1D_c et 1D_d représentant respectivement un montant restant dû lié à la transaction financière et une liste de marchandises comptabilisées sous la forme d'un devis détaillé.

Les données contextuelles restituées par l'interface de restitution 1D peuvent être préalablement enregistrées dans une mémoire volatile de restitution dédiée à la restitution graphique ou sonore desdites données, ladite mémoire de restitution coopérant avec l'unité de traitement 11 ou étant interne à cette dernière. Il est ainsi possible de solliciter l'unité de traitement 11 pour accéder en lecture à ladite mémoire de restitution. En variante, il est possible de commander à ladite unité de traitement 11, de mettre en œuvre une capture de tout ou partie du contenu restitué et d'en inscrire une représentation numérique dans ladite mémoire de restitution. Cette dernière peut en outre être dissociée ou éventuellement confondue avec la mémoire de données 12.

Par ailleurs, l'interaction entre un utilisateur U et l'interface homme-machine de consigne et de restitution 1D est traduite en une donnée de consigne Cₚ par ladite interface 1D. Selon l'exemple de réalisation en liaison avec la figure 1 et 4, une telle donnée de consigne Cₚ est transmise à l'unité de traitement 11. Cette dernière peut proposer avantageusement un service d'abonnement aux différents procédés qu'elle met en œuvre. Un tel service d'abonnement permet de mettre à disposition, de tous procédés préalablement abonnés audit service, ladite donnée de consigne Cₚ. Un tel procédé abonné peut dès lors « s'approprier » ladite donnée Cₚ. Au sens de l'invention et dans tout le document, on entend par le terme « s'approprier » une action consistant à requérir une non-distribution de ladite consigne Cₚ aux autres procédés abonnés par l'unité de traitement 11. Une telle requête en non-distribution peut consister en la sollicitation d'un service déterminé mis à disposition par ladite unité de traitement 11. Si aucun procédé abonné souhaite s'approprier une donnée de consigne Cₚ, l'unité de traitement 11 met celle-ci à la disposition du procédé ayant provoqué la restitution de données contextuelles ayant suscité l'interaction avec l'utilisateur U dont découle la donnée de consigne Cₚ. Selon une variante, un procédé, s'étant préalablement approprié une donnée de consigne Cₚ, peut autoriser l'unité de traitement 11 à mettre à la disposition des autres procédés une telle donnée de consigne Cₚ, en sollicitant un service idoine en distribution de ladite donnée de consigne Cₚ auprès de l'unité de traitement 11. Une telle requête en distribution peut consister en un autre service déterminé mis à disposition par l'unité de traitement 11. Une telle donnée de consigne Cₚ est dès lors transmise au procédé ayant provoqué la restitution des données contextuelles ayant suscité l'interaction avec l'utilisateur U du dispositif 10 traduite par l'interface de consigne 1D en la donnée de consigne Cₚ. En l'espèce, ladite donnée Cₚ est disponible pour le procédé d'encaissement.

Les données de consignes Cₚ peuvent ainsi découler d'interactions entre l'interface de consigne et de restitution 1D et un utilisateur U. Une telle interaction peut découler d'une commande vocale émise par ledit utilisateur U via un microphone. Selon une variante une telle interaction peut consister en la sélection d'un emplacement ou plage de pointage prédéterminé, décrivant par exemple une touche virtuelle, que l'utilisateur U peut sélectionner via l'interface de consigne 1D. A titre d'exemple non limitatif, ledit utilisateur U peut survoler, par exemple avec son doigt ou au moyen d'un dispositif de pointage adapté, différentes plages de pointage puis sélectionner une touche virtuelle correspondant à un mode d'encaissement particulier. Comme l'indique la figure 4, une telle touche virtuelle peut, à titre d'exemple, symboliser un encaissement en espèces par la présence d'un symbole « € ». Une donnée de consigne Cₚ, en lien avec un pointage de l'utilisateur via une interface 1D sous la forme d'un écran tactile, comporte avantageusement un couple de valeurs entières désignant un pixel dudit écran traduisant l'emplacement du point de sélection sur l'interface homme-machine de consigne 1D. Eventuellement, une telle donnée de consigne Cₚ peut en outre comporter un ou plusieurs attributs traduisant, à titre d'exemple non limitatif, un type de sélection particulier, tel que l'actionnement de la touche droite ou gauche d'un dispositif de pointage de type souris pour ordinateur.

Pour pouvoir coopérer avec un périphérique, tel que le monnayeur 20 décrit en liaison avec la figure 1, un dispositif électronique 10, par exemple une caisse enregistreuse, comporte également des moyens de communication 14, sous la forme d'un modulateur-démodulateur, permettant audit dispositif électronique 10 de communiquer au travers d'un réseau de communication N1, par exemple une liaison sans fil s'appuyant sur un protocole de proximité de type WIFI ou Bluetooth. Les moyens de communication 14 peuvent en outre ou en variante consister avantageusement en un port USB, « Universal Serial Bus » selon une terminologie anglo-saxonne, afin de mettre en œuvre une liaison N1 de type filaire.

A l'instar d'un dispositif électronique 10 conforme à l'invention, un périphérique 20, 20-2 ou 20-3 ci-après référencé 20 par mesure de simplification, comporte avantageusement une unité de traitement 21, par exemple sous la forme d'un ou plusieurs microcontrôleurs ou processeurs, coopérant avec des moyens de mémorisation 22, sous la forme d'une mémoire de données et éventuellement d'une mémoire de programmes, lesdites mémoires pouvant être dissociées ou former éventuellement une seule et même entité physique. Un tel périphérique 20 comporte également au moins un moyen de communication 23, sous la forme d'un modulateur-démodulateur, permettant de communiquer avec le dispositif électronique 10. Les moyens 23 peuvent alors consister avantageusement en un port USB « Universal Serial Bus » selon une terminologie anglo-saxonne, ou tout autre moyen supportant un protocole de communication de proximité, par exemple de type Bluetooth ou WiFi. Les moyens de mémorisation 22 et les moyens de communication 23 coopèrent avantageusement avec l'unité de traitement 21 par un ou plusieurs bus de communication, représentés en figure 1 par des doubles flèches. La mémoire de programmes 22 dudit périphérique 20 enregistre les instructions de programme d'un troisième produit programme d'ordinateur P3, mettant en œuvre des traitements ou actions spécifiques audit périphérique 20, lors de l'interprétation et/ou exécution desdites instructions par l'unité de traitement 21. Une telle interprétation et/ou exécution peut, à titre d'exemple non limitatif, déclencher la mise en œuvre d'un procédé, par exemple un procédé de paiement.

Comme évoqué précédemment, pour apporter de nouvelles fonctionnalités, supplanter des fonctionnalités existantes à un procédé d'application A, voire encore pour adapter une caisse enregistreuse 10 mettant en œuvre un procédé d'encaissement s'appuyant sur un nouveau monnayeur 20 requérant un mode opératoire et/ou de communication différent d'un précédent monnayeur, l'invention prévoit d'enregistrer des instructions d'un deuxième produit programme d'ordinateur P2 dans la mémoire de programmes 13 du dispositif électronique communicant 10. Lesdites instructions de programme P2 ont été préalablement agencées durant une phase préalable de développement et/ou d'édition du programme P2, pour provoquer la mise en œuvre d'un procédé déclencheur d'actions complémentaires, avantageusement à la lumière d'éléments contextuels restitués par l'interface homme-machine de restitution 1D dudit dispositif 10, lors de la mise en œuvre du procédé d'application A par l'unité de traitement 11. Un exemple de mise en œuvre d'un procédé 100 déclencheur d'actions complémentaires est décrit en liaison avec la figure 2.

Pour mettre en œuvre un tel procédé 100, la mémoire de données 12 d'un dispositif 10 tel que décrit en liaison avec la figure 1 peut comporter, à titre d'exemple non limitatif, une table de consignes d'intérêt agencée pour enregistrer un ou plusieurs enregistrements respectivement dédiés à une ou plusieurs consignes d'intérêt. Chaque enregistrement est agencé pour mémoriser un référentiel de consignes d'intérêt C_{p_I} et un référentiel d'actions I_{c_I} désignant une ou plusieurs actions complémentaires à déclencher si une consigne Cₚ correspond audit référentiel de consignes d'intérêt C_{p_I}. Un référentiel de consignes d'intérêt C_{p_I} peut comporter une valeur, tel qu'à titre d'exemple non limitatif un code informatique désignant une touche d'un clavier ou une plage de valeurs désignant une zone de sélection délimitant, par exemple, la surface d'une touche virtuelle restituée par l'interface de restitution 1D, voire encore un spectre traduisant un ou plusieurs sons de référence. Une plage de valeur désignant une surface de sélection peut dès lors être caractérisée par des couples de coordonnées délimitant un rectangle, un triplet désignant le centre et le rayon d'un disque ou toute caractéristique caractérisant une autre forme géométrique incluant une touche virtuelle. Ledit référentiel de consigne d'intérêt C_{p_I} peut en outre comporter des attributs complémentaires caractérisant, à titre d'exemple, une touche déterminée, droite ou gauche, si le dispositif de pointage utilisé est une souris d'ordinateur.

Un référentiel d'actions I_{c_I} peut comporter un champ dédié à un identifiant d'actions complémentaires désignant, par exemple dans la mémoire de programmes 13, des instructions de programme dédiées à un ou plusieurs traitements ou actions complémentaires définis lors d'une étape de paramétrage préalable du dispositif 10. En variante, de telles instructions de programme peuvent être inscrites dans la mémoire de données 12.

Lorsque l'interface homme-machine de restitution et de consigne 1D consiste en un écran tactile, un procédé d'application A peut dès lors restituer plusieurs contenus graphiques différents, tel qu'à titre d'exemples une première page écran relative à l'encaissement d'une transaction et une deuxième page écran relative au suivi de commandes ou à la gestion du stock de marchandises. Selon la page écran restituée, une donnée de consigne Cₚ, comportant un couple de coordonnées, doit dès lors être interprétée pour provoquer la mise en œuvre d'une action ou traitement déterminée parmi deux actions ou traitements différents. Un enregistrement dédié à une consigne d'intérêt doit dès lors comporter un champ additionnel comportant la teneur de données contextuelles d'intérêt D_{c_I} caractérisant un contenu propre à une page écran déterminée. A titre d'exemple non limitatif, de telles données contextuelles d'intérêt D_{c_I} peuvent être une représentation numérique d'un contenu contextuel graphique ou sonore prédéfini et restituable par l'interface de restitution 1D. De telles données contextuelles d'intérêt D_{c_I} peuvent en outre désigner un emplacement particulier au sein d'un contenu associé à ladite représentation numérique lors de sa restitution par l'interface de restitution 1D.

La figure 2 décrit un schéma fonctionnel conforme à l'invention d'un procédé 100 déclencheur d'actions complémentaires.

Pour illustrer l'apport de l'invention, étudions un exemple d'application selon lequel un utilisateur U d'une caisse enregistreuse 10 conforme à l'invention désire procéder à l'encaissement d'une transaction financière en espèces. Un tel utilisateur U peut à titre d'exemple être un caissier.

L'interface homme-machine de restitution et de consigne 1D de ladite caisse enregistreuse 10 est éventuellement constituée d'un écran tactile. L'unité de traitement 11 de ladite caisse enregistreuse 10 met en œuvre un procédé d'encaissement A comportant notamment une étape pour restituer un contenu graphique. Un tel contenu graphique peut consister, par exemple, en une page écran relative à l'encaissement de ladite transaction financière telle que représentée en liaison avec la figure 4. Ladite caisse enregistreuse 10 coopère avec un périphérique tel, qu'à titre d'exemple non limitatif, un monnayeur 20. La mise en coopération entre ledit monnayeur 20 et ladite caisse enregistreuse 10 est postérieure à l'initialisation du procédé d'encaissement A, c'est-à-dire que la communication entre ledit monnayeur 20 et ladite caisse 10 n'est pas supportée par ledit procédé A. Afin de ne pas mettre à jour le procédé d'encaissement A, l'unité de traitement 11 de ladite caisse enregistreuse 10 met en œuvre un procédé 100 déclencheur d'actions complémentaires, ledit procédé 100 faisant ainsi fonction de « portail informatique », de passerelle ou de logiciel pilote entre ladite caisse 10 et ledit monnayeur 20.

Pour instruire la caisse enregistreuse 10 d'un encaissement en espèces, un utilisateur U sélectionne sur l'interface de consigne 1D de ladite caisse enregistreuse 10 un icône de consigne représentant un moyen de paiement en espèces, représenté par le symbole « € » en liaison avec la figure 4. Une telle sélection peut découler de l'apposition d'un doigt de l'utilisateur U sur ledit icône de consigne. L'interface homme-machine de consigne 1D détermine dès lors l'emplacement dudit icône et traduit cet emplacement en une donnée de consigne Cₚ, à titre d'exemple non limitatif, en coordonnées spatiales. Une telle détermination peut par exemple découler de la détection d'un changement de potentiel électrique sur l'écran tactile 1D de ladite caisse enregistreuse 10 ou de l'interruption de faisceaux infra-rouge pour des écrans 1D utilisant une méthode de détermination infra-rouge. L'interface 1D met à disposition de l'unité de traitement 11 de la caisse 10 ladite donnée de consigne Cₚ.

Dans un exemple préféré mais non limitatif de l'invention, la mémoire de données 12 de la caisse enregistreuse 10 comporte une table d'enregistrements respectivement dédiés à des consignes d'intérêt que nous nommerons « table de consignes d'intérêts » par mesure de simplification. Une telle table peut être enregistrée sous la forme d'une base de données ou d'un tableau dans la mémoire de données 12. Ladite table peut avoir été préalablement paramétrée et initialisée lors de la mise en œuvre d'un procédé 300 de paramétrage décrit ultérieurement. Ainsi, un enregistrement d'une telle table peut comporter un premier champ dédié à un référentiel de consignes d'intérêts C_{p_I}, un deuxième champ dédié à un référentiel d'action I_{c_I}, un troisième champ optionnel et dédié à des données contextuelles d'intérêt D_{c_I}. A titre d'exemple non limitatif, ledit premier champ C_{p_I} peut dès lors comporter une plage de sélection de pixels caractérisant la surface d'un icône de consigne déterminé, à titre d'exemple celui comportant le symbole « € » en liaison avec la figure 4. Le deuxième champ peut comporter un identifiant d'action complémentaire désignant des instructions de programme dédiées à un traitement complémentaire déterminé, tel qu'à titre d'exemples non limitatifs, des instructions de programme dont l'exécution ou l'interprétation par l'unité de traitement 11 provoque la mise en œuvre d'une communication entre le monnayeur 20 et la caisse enregistreuse 10. Le troisième champ peut comporter la teneur de données contextuelles telle qu'à titre d'exemple non limitatif une représentation numérique de la restitution graphique de l'icône de consigne représentant un moyen de paiement en espèces et des données caractérisant l'emplacement de l'icône sur la page écran où est présumé restitué graphiquement ledit icône par l'interface de restitution 1D. Une telle représentation graphique peut consister en un tableau de pixels encodant une nuance de gris pour chacun d'entre eux, associé à un couple de coordonnées spatiales caractérisant par exemple l'emplacement du centre de l'icône de consigne sur l'interface 1D lors de la restitution de la page écran associée.

La mémoire de programmes 13 peut comporter une base de données ou tableau comportant des instructions de programme dédiées à un ou plusieurs traitements complémentaires préalablement définis lors de la mise en œuvre d'un procédé 300 de paramétrage décrit ultérieurement. De telles instructions de programme peuvent, lors de leur exécution ou interprétation par l'unité de traitement 11 de la caisse enregistreuse 10, mettre en œuvre un procédé de paiement par monnayeur.

En liaison avec la figure 2, un procédé 100, conforme à l'invention et mis en œuvre par l'unité de traitement 11 de ladite caisse enregistreuse 10 décrite en liaison avec la figure 1, comporte une première étape 101 pour détecter une mise à disposition par l'unité de traitement 11 d'une donnée de consigne Cₚ.

Le procédé 100 comporte dès lors une étape 102 pour rechercher dans la table de consignes d'intérêt inscrite dans la mémoire de données 12, un enregistrement comportant la valeur de la donnée de consigne Cₚ. L'étape 102 peut ainsi consister à effectuer un test pour déterminer si la teneur de la donnée de consigne Cₚ extraite est incluse dans une des plages de données des référentiels de consigne d'intérêt C_{p_I} prédéterminées au sein respectivement des enregistrements de la table de consignes d'intérêt. Ledit test peut être effectué par des fonctions et/ou des opérateurs informatiques connus.

Selon une première situation, si l'étape 102 atteste qu'aucun enregistrement ne comporte la teneur de la donnée de consigne Cₚ, situation symbolisée par le lien 102-n en liaison avec la figure 2, la mise en œuvre du procédé 100 se termine.

Selon une deuxième situation, si l'étape 102 atteste qu'un référentiel de consigne d'intérêt C_{p_I} d'un enregistrement comporte la teneur de la donnée de consigne Cₚ, situation symbolisée par le lien 102-y en liaison avec la figure 2, le procédé 100 comporte une étape 103 pour requérir une non-distribution de la donnée de consigne Cₚ au procédé d'encaissement A ainsi qu'à tout autre procédé complémentaire concomitamment mis en œuvre par l'unité de traitement 11. Une telle requête peut consister à solliciter un service spécifique de l'unité de traitement 11, tel que décrit précédemment. Ce recours peut s'apparenter à une prise de contrôle de la caisse enregistreuse 10 par le procédé 100 à « l'insu » du procédé d'encaissement A. Pour prévenir toute nouvelle consigne émanant de l'utilisateur U, l'invention peut prévoir que l'étape 102 consiste en outre à élaborer un contenu graphique et/ou sonore et à en déclencher la restitution par l'interface homme-machine de restitution 1D. A titre d'exemple non limitatif, un tel contenu peut consister en la superposition d'un voile gris sur la page écran courante, occultant des icônes ou touches virtuelles. Ainsi, l'utilisateur U n'est pas incité à solliciter l'interface 1D tant que ledit voile demeure visible par ledit utilisateur.

Selon une variante de l'invention, l'étape 102 pour rechercher dans la table de consignes d'intérêt de la mémoire de données 12 un enregistrement comportant la valeur de la donnée de consigne Cₚ, peut consister en outre à déterminer le contexte de mise en œuvre courant du procédé d'application A pour déduire de ce dernier si la consigne Cₚ doit être considérée comme une consigne d'intérêt ou, au contraire, doit être ignorée quand bien même un enregistrement comporte la teneur de ladite consigne. En effet, comme nous l'avons vu précédemment, le procédé d'encaissement A peut restituer plusieurs contenus graphiques différents, tels qu'à titre d'exemples, une première page écran relative à l'encaissement d'une transaction et une deuxième page écran relative au suivi de commandes ou à la gestion d'un stock de marchandises. Pour déterminer l'action complémentaire à mettre en œuvre à la suite d'une interaction de l'utilisateur U sur l'interface de restitution et de consigne 1D, l'étape 102 peut consister en outre à déterminer et à analyser tout ou partie du contenu restitué par l'interface homme-machine de consigne 1D lors de ladite interaction avec l'utilisateur U, pour en déduire le contexte courant de mise en œuvre du procédé A. De cette manière, le procédé 100 n'est pas invasif au regard du procédé d'application A.

Une telle étape peut consister à rechercher dans la mémoire de restitution tout ou partie des représentations numériques des éléments, restitués par l'interface 1 et que nous qualifierons de contextuels, caractéristiques du contexte de mise en œuvre courant du procédé d'application A. A titre d'exemple un tel élément caractéristique peut consister en l'icône de consigne 1D_a dont la représentation numérique est inscrite dans la mémoire de restitution. L'étape 102 consiste alors à comparer ledit élément contextuel restitué par l'interface de restitution 1D avec les données contextuelles d'intérêt D_{c_I} associées à l'enregistrement comportant la donnée de consigne Cₚ. L'unité de traitement 11 peut effectuer pour cela, à titre d'exemple non limitatif, une reconnaissance optique de caractère OCR, « Optical Character Recognition » selon une terminologie anglo-saxonne, pour discriminer une chaîne de caractère et/ou un caractère alphanumérique contenu dans ledit élément contextuel et à comparer celle-ci à la donnée contextuelle d'intérêt D_{c_I}. Selon une variante, l'unité de traitement 11 peut déterminer un taux de dissemblance ou une distance entre deux représentations numériques, respectivement celle restituée graphiquement par l'interface 1D et celle contenue dans l'enregistrement en tant que donnée contextuelle d'intérêt D_{c_I}. Toute autre méthode permettant de déterminer un taux de dissemblance entre deux représentations numériques peut en variante être employée.

Selon une première situation, symbolisée en figure 4 par le lien 102-n, si l'unité de traitement 11 atteste d'un taux de dissemblance élevé, c'est-à-dire que les deux représentations numériques ne sont pas semblables ou identiques, la mise en œuvre du procédé 100 se termine.

Selon une deuxième situation symbolisé par le lien 102-y, si l'étape 102 atteste d'un taux de dissemblance faible, c'est-à-dire que les deux représentations numériques sont considérées comme étant semblables ou identiques, alors le procédé 100 met en œuvre l'étape 103 pour requérir une non-distribution de la donnée de consigne Cₚ au procédé d'encaissement A, tel que précédemment décrit.

A l'issue de la mise en œuvre de l'étape 103, le procédé 100 comporte une étape 104 pour déclencher la mise en œuvre par l'unité de traitement 11 d'une action complémentaire déterminée. Une telle étape peut consister à extraire, de l'enregistrement comportant la teneur de la donnée de consigne Cₚ, l'identifiant d'action complémentaire associé, puis à rechercher 104a dans la mémoire de programmes 13 les instructions de programme désignées par ledit identifiant d'action complémentaire. Selon notre exemple applicatif, de telles instructions, lorsqu'elles sont exécutées ou interprétée par l'unité de traitement 11, peuvent non limitativement mettre en œuvre une action complémentaire d'encaissement par monnayeur. Un telle action complémentaire peut comporter, selon un premier mode de réalisation, une étape pour déterminer le montant de la transaction à encaisser. Selon ce premier mode, la mémoire de restitution peut comporter une structure de données comportant la valeur numérique dudit montant, celle-ci ayant été précédemment inscrite lors de la mise en œuvre d'une étape du procédé d'encaissement A. L'unité de traitement 11 peut dès lors accéder en lecture à ladite mémoire de restitution et extraire directement ledit montant.

Selon une autre variante conforme à l'invention, l'unité de traitement 11 peut déterminer le montant de la transaction à encaisser, à titre d'exemple 9,85€ selon l'exemple décrit en liaison avec la figure 4, à partir de la restitution graphique du montant restant dû 1D_c restitué par l'interface homme-machine de restitution 1D, lors de la mise en œuvre du procédé d'encaissement A. L'étape 104 consiste ainsi à rechercher dans la mémoire de restitution, la représentation numérique dudit montant, puis à extraire ce dernier de ladite représentation numérique. L'unité de traitement 11 effectue dès lors, à titre d'exemple non limitatif, une reconnaissance optique de caractère OCR, « Optical Character Recognition » selon une terminologie anglo-saxonne, pour déterminer le montant de la transaction à encaisser. L'emplacement de ladite représentation a été préalablement déterminé et paramétré lors de la mise en œuvre d'un procédé 300 de paramétrage décrit ultérieurement. Selon une variante, l'unité de traitement 11 peut déterminer un taux de dissemblance entre deux représentations numériques, respectivement celle restituée graphiquement par l'interface 1D et celle contenue dans une base de donnée ou un tableau enregistrant une représentation numérique de symboles ou d'images de références, susceptibles d'être restitués dans l'élément de restitution 1D_c représentant le montant restant dû lié à la transaction, ladite base de donnée ou tableau étant enregistré dans la mémoire de données 12. De tels symboles peuvent consister à titre d'exemple non limitatif aux chiffres arabes « 1 », « 2 », ..., « 9 » et tout signe de ponctuation permettant de marquer une séparation entre les dizaines et les centaines tel qu'à titre d'exemple « , » ou « . ». L'unité de traitement 11 peut dès lors comparer la représentation numérique des symboles de référence à la représentation numérique de l'élément de restitution 1D_c, et déterminer un taux de dissemblance entre chaque image. Toute autre méthode permettant de déterminer un taux de dissemblance entre deux images peut en variante être employée.

Une fois le montant de la transaction à encaisser déterminé, l'action complémentaire, dont la mise en œuvre a été provoquée par le procédé 100 de paiement par monnayeur, peut comporter une étape 104b pour élaborer une requête de pilotage Rₜ du monnayeur 20. Ladite requête Rₜ peut comporter la teneur des données de pilotage I_{c} nécessaires à la mise en œuvre du procédé de paiement par le monnayeur 20. Les données de pilotage I_{c} peuvent avantageusement comporter ledit montant de la transaction précédemment déterminé, voire un identifiant de caisse enregistreuse 10. L'unité de traitement 11 déclenche alors automatiquement l'émission de ladite requête de pilotage Rt par les moyens de communication 14 de la caisse enregistreuse 10 à destination du monnayeur 20.

De son côté, le monnayeur 20 peut mettre en œuvre un procédé 200 de communication avec la caisse enregistreuse 10 représenté en figure 3. Un tel procédé 200 peut comporter une étape 201 pour recevoir et décoder la requête de pilotage Rₜ. Une étape subséquente 202 peut consister à extraire de ladite requête le montant de la transaction à encaisser, puis déclencher la mise en œuvre d'un procédé de paiement par l'unité de traitement 21 dudit monnayeur 20.

Selon une variante de l'invention, le procédé 200 de communication avec la caisse enregistreuse 10 peut comporter une étape 203 pour élaborer et déclencher à destination de la caisse enregistreuse 10 l'émission d'un ou plusieurs messages d'état Mₜ. Un tel message d'état Mₜ peut comporter des données d'état Dₑ caractérisant, à titre d'exemple non limitatif, un état de fonctionnement courant dudit monnayeur 20, caractérisant un acquittement de transaction, le niveau des pièces dans le monnayeur 20, etc.

Le procédé 100 peut comporter dès lors une étape 104c subséquente pour recevoir, via les moyens de communication 14, ledit message d'état Mₜ, décoder et extraire dudit message d'état Mₜ la teneur desdites données d'état Dₑ. Le procédé 100 peut comporter en outre une étape 104d pour déclencher la restitution de tout ou partie des données d'état Dₑ précédemment extraites par l'interface homme-machine de restitution 1D, afin d'informer l'utilisateur U du dispositif 10 de l'avancée du traitement mis en œuvre par le monnayeur 20.

Une fois l'action complémentaire, mise en œuvre à l'étape 104 du procédé 100 terminée, le procédé 100 comporte avantageusement une étape 105 pour requérir la distribution de la donnée de consigne Cₚ au procédé d'encaissement A lors d'une étape 105. Tout se passe dès lors comme si le procédé 100 déclencheur d'actions complémentaires n'avait jamais requis la non-distribution de ladite donnée de consigne Cₚ. Le procédé d'encaissement A exécute alors normalement une action associée à ladite consigne Cₚ, si une telle consigne est jugée d'intérêt par ledit procédé d'application A.

Selon une variante de l'invention, un procédé 100 déclencheur d'actions complémentaires peut comporter une étape non représentée en figure 2, pour élaborer et encoder une nouvelle donnée de consigne Cₚ avant de requérir la distribution de ladite donnée de consigne Cₚ à l'étape 105. Une telle variante permet ainsi au procédé 100 d'altérer la teneur de la consigne Cₚ, par exemple à la suite d'une erreur de fonctionnement détectée du périphérique 20. Ainsi, alors qu'une consigne d'encaissement a été transmise par l'interface 1D, celle-ci peut se traduire par une consigne d'annulation ou tout simplement par une absence de consigne pour le procédé d'application A.

Avant toute mise en œuvre du procédé 100 déclencheur d'actions complémentaires, l'invention prévoit un procédé 300 de paramétrage dont l'objet consiste à déterminer les consignes d'intérêt, voire des données contextuelles d'intérêt, et d'associer auxdites consignes d'intérêt une ou plusieurs actions complémentaires. Un tel procédé 300 peut consister ainsi à initialiser la table de consignes d'intérêt en mémoire de données 12 et/ou en mémoire de programme 13. A titre d'exemple non limitatif, un procédé 300 peut en outre comporter une première étape pour enregistrer un identifiant d'action complémentaire dans le champ dédié au référentiel d'action I_{c_I} de chaque enregistrement de la table de consignes d'intérêt de la mémoire de données 12. Ledit procédé 300 peut comporter dès lors une deuxième étape pour capturer la représentation numérique d'un emplacement particulier d'une page écran restituée par l'interface homme-machine de restitution et de consigne 1D, par exemple l'emplacement d'un icône de consigne symbolisant un encaissement en espèce sur la page écran relative à l'encaissement d'une transaction. Ledit procédé 300 peut comporter une troisième étape pour enregistrer une plage de valeurs correspondant à l'emplacement dudit icône dans le référentiel de consignes d'intérêts C_{p_I} associé à un enregistrement dédié à une consigne de paiement en espèces, et enregistrer la représentation numérique de ladite capture dans le champ dédié aux données contextuelles D_{c_I} dudit enregistrement.

En outre, un tel procédé 300 peut permettre d'initialiser le fonctionnement de l'unité de traitement 11. Une telle initialisation peut consister à charger, au sein de la mémoire de programmes 13, les instructions d'un programme P2 qui, lorsqu'elles sont exécutées ou interprétées par ladite unité de traitement 11, déclenchent la mise en œuvre d'un procédé 100 déclencheur d'actions complémentaires conforme à l'invention.

Selon une variante de l'invention, un système conforme à l'invention peut comporter un ou plusieurs dispositifs électroniques 10 coopérant avec un ou plusieurs périphériques 20, 20-2, 20-3. Chaque dispositif 10 et chaque périphérique 20 comportent dès lors un identifiant respectif qui leur est propre. Lesdits identifiants sont dès lors intégrés aux messages de pilotage Rₜ émanant des dispositif électroniques 10 et aux messages d'états Mₜ émanant des périphériques 20, 20-2, 20-3 et transmis au sein du réseau de communication N1, pour permettre d'identifier les émetteurs et les destinataires desdits messages Mₜ et requêtes Rt.

Chaque remplacement, ajout ou mise à jour d'un périphérique 20, 20-2, 20-3 n'est assujetti qu'à une mise à jour du procédé 100 déclencheur d'actions complémentaires, par exemple par le chargement en mémoire de programmes 13 d'instructions de programme P2 modifiées en conséquence. Le procédé d'application A et le procédé mis en œuvre par ledit périphérique 20 restent quant à eux inchangés.

## Revendications

1. Procédé (100) déclencheur d'actions complémentaires mis en œuvre par une unité de traitement (11) d'un dispositif électronique (10), ledit dispositif électronique (10) comportant une mémoire de données (12), une mémoire de programme (13) et un moyen de communication (14) coopérant avec l'unité de traitement et assurant un mode de communication déterminé au travers d'un réseau de communication (N1), le moyen de communication étant relié à un périphérique d'encaissement (20) pour coopérer avec l'unité de traitement, l'unité de traitement (11) mettant en œuvre un procédé d'application d'encaissement (A) pour exécuter une action en réponse à la mise à disposition d'une donnée de consigne (Cₚ) par ladite unité de traitement (11), la donnée de consigne (Cₚ) étant élaborée par une interface homme-machine de consignes (1D) coopérant avec l'unité de traitement (11), ladite donnée de consigne (Cₚ) traduisant une interaction entre un utilisateur (U) et ladite interface (1D), le procédé d'application d'encaissement (A) ne supportant pas la communication entre ledit dispositif électronique (10) et le périphérique d'encaissement (20), ledit procédé (100) déclencheur d'actions complémentaires étant **caractérisé en ce qu'**il comporte :
- une étape (101) pour détecter la mise à disposition par l'unité de traitement de la donnée de consigne (Cₚ) en utilisant un service d'abonnement proposé par l'unité de traitement (11), ledit service d'abonnement permettant de mettre à disposition de tous les procédés préalablement abonnés audit service d'abonnement ladite donnée de consigne ;
- une étape (102) pour rechercher dans la mémoire de données (12) coopérant avec l'unité de traitement (11), un enregistrement comportant la valeur de la donnée de consigne (Cₚ) ;
- si (102-y) la mémoire de données (12) comporte un tel enregistrement, ledit procédé comporte :
∘ une étape (103) pour requérir la non-distribution de ladite donnée de consigne (Cₚ) au procédé d'application d'encaissement (A) ainsi qu'aux autres procédés abonnés audit service d'abonnement par l'unité de traitement (11) ;
∘ une étape (104) pour provoquer la mise en œuvre par l'unité de traitement (11) d'une action complémentaire déterminée consistant à :
▪ élaborer une requête de pilotage (Rt) dudit périphérique d'encaissement (20) ;
▪ déclencher l'émission de ladite requête de pilotage (Rt) par les moyens de communication (14) à destination du périphérique (20), ladite requête (Rt) comportant des données de pilotage (I_{c}) ;
∘ une étape (105) pour requérir la distribution de ladite donnée de consigne (Cₚ) au procédé d'application d'encaissement (A) et des autres procédés en sollicitant un service idoine de distribution de ladite donnée de consigne (Cp) auprès de l'unité de traitement une fois l'action complémentaire terminée.

2. Procédé (100) selon la revendication précédente, pour lequel l'étape (105) pour requérir la distribution de ladite donnée de consigne (Cₚ) au procédé d'application d'encaissement consiste préalablement à élaborer une nouvelle donnée de consigne (Cₚ).

3. Procédé (100) selon la revendication 1 ou 2, pour lequel :
- la mémoire de données (12) comporte une représentation numérique d'un contenu perceptible par l'utilisateur (U), dont la restitution par une interface de restitution (1D) coopérant également avec ladite unité de traitement (11) audit utilisateur a été préalablement provoquée par la mise en œuvre du procédé d'application d'encaissement (A) ;
- l'enregistrement de la mémoire de données (12) comportant la valeur de la donnée de consigne (Cₚ) comprend en outre la teneur d'une donnée contextuelle d'intérêt (D_{c_I}) ;
- ledit procédé (100) comporte une étape préalable à l'étape (103) pour requérir la non-distribution de ladite donnée de consignes (Cₚ) au procédé d'application d'encaissement, pour comparer les teneurs respectives de la représentation numérique du contenu restitué par l'interface de restitution (1D) et de la donnée contextuelle d'intérêt (D_{c_I}), ladite étape (103) pour requérir la non-distribution n'étant mise en œuvre que si ladite étape pour comparer lesdites teneurs de ladite représentation numérique et de ladite donnée contextuelle d'intérêt (D_{c_I}) atteste que ces dernières sont semblables.

4. Procédé (100) selon l'une quelconque des revendications précédentes, pour lequel :
- la mémoire de programmes (13) comporte des instructions de programme dédiées à une ou plusieurs actions complémentaires ;
- l'étape (104) pour provoquer la mise en œuvre par l'unité de traitement (11) d'une action complémentaire déterminée consiste à :
∘ extraire de l'enregistrement comportant la valeur de la donnée de consigne (Cₚ), un identifiant d'action complémentaire désignant les instructions de programme dédiées à ladite action complémentaire déterminée au sein de la mémoire de programmes (13) ;
∘ déclencher l'exécution desdites instructions de programme par l'unité de traitement (11).

5. Procédé (100) selon l'une des revendications précédentes pour lequel l'étape (104) pour provoquer la mise en œuvre par l'unité de traitement (11) d'une action complémentaire déterminée consiste en outre à :
- recevoir via les moyens de communication (14), un message d'état (Mt) émis par le périphérique d'encaissement (20), ledit message d'état (Mt) comprenant la teneur de données états (Dₑ) caractérisant l'état de fonctionnement courant dudit périphérique d'encaissement (20) ;
- décoder ledit message d'état (Mₜ) et en extraire la teneur desdites données états (Dₑ) ;
- déclencher la restitution de tout ou partie desdites données état (Dₑ) par l'interface homme-machine de restitution (1D) du dispositif électronique (10).

6. Produit programme d'ordinateur (P2) comportant des instructions de programme qui, lorsqu'elles sont préalablement enregistrées dans une mémoire de programmes (13) d'un dispositif électronique (10) comportant outre ladite mémoire de programmes (13), une unité de traitement (11), une mémoire de données (12), une interface homme-machine de restitution et de consigne (1D) et des moyens de communication (14) assurant un mode de communication déterminé, lesdites mémoires (12, 13), ladite interface (1D) et lesdits moyens de communication (14) coopérant avec ladite unité de traitement (11), provoquent la mise en œuvre d'un procédé (100) déclencheur d'actions complémentaires selon l'une quelconque des revendication 1 à 5.

7. Dispositif électronique (10) comportant une unité de traitement (11), une mémoire de données (12), une mémoire de programmes (13), une interface homme-machine de restitution et de consigne (1D) et des moyens de communication (14) assurant un mode de communication déterminé, lesdites mémoires (12, 13), ladite interface (1D) et lesdits moyens de communication (14) coopérant avec ladite unité de traitement (11), ledit dispositif électronique (10) étant connecté à un périphérique d'encaissement (20) par le moyen de communication (14) et comprenant un procédé d'application d'encaissement (A) ne supportant pas la communication avec le périphérique d'encaissement (20), **caractérisé en ce que** ledit dispositif électronique comporte dans la mémoire de programme (13), les instructions d'un produit programme d'ordinateur (P2) selon la revendication précédente.

8. Système comportant au moins un dispositif électronique (10) selon la revendication 7 coopérant avec au moins un périphérique d'encaissement (20).

## Patentansprüche

1. Verfahren (100) zum Auslösen ergänzender Aktionen, implementiert von einer Verarbeitungseinheit (11) eines elektronischen Geräts (10), wobei das genannte elektronische Gerät (10) einen Datenspeicher (12), einen Programmspeicher (13) und ein Kommunikationsmittel (14) umfasst, das mit der Verarbeitungseinheit zusammenwirkt und einen bestimmten Kommunikationsmodus über ein Kommunikationsnetzwerk (N1) gewährleistet, wobei das Kommunikationsmittel mit einem Inkassoperipheriegerät (20) zum Zusammenwirken mit der Verarbeitungseinheit verbunden ist, wobei die Verarbeitungseinheit (11) ein Inkassoanwendungsverfahren (A) zum Ausführen einer Aktion als Reaktion auf die Bereitstellung von einem Solldatum (Cₚ) durch die genannte Verarbeitungseinheit (11) implementiert, wobei das Solldatum (Cₚ) von einer Mensch-Maschine-Schnittstelle für Solldaten (1D) erstellt wird, die mit der Verarbeitungseinheit (11) zusammenwirkt, wobei das genannte Solldatum (Cₚ) eine Interaktion zwischen einem Benutzer (U) und der genannten Schnittstelle (1D) wiedergibt, wobei das Inkassoanwendungsverfahren (A) die Kommunikation zwischen dem genannten elektronischen Gerät (10) und dem Inkassoperipheriegerät (20) nicht unterstützt, wobei das genannte Verfahren (100) zum Auslösen ergänzender Aktionen **dadurch gekennzeichnet ist, dass** es Folgendes beinhaltet:
- einen Schritt (101) des Erfassens der Bereitstellung des Solldatums (Cₚ) durch die Verarbeitungseinheit unter Verwendung eines von der Verarbeitungseinheit (11) angebotenen Abonnementdienstes, wobei der genannte Abonnementdienst es zulässt, das genannte Solldatum allen Verfahren, die zuvor den genannten Abonnementdienst abonniert haben, bereitzustellen;
- einen Schritt (102) des Suchens nach einem den Wert des Solldatums (Cₚ) enthaltenden Datensatz in dem mit der Verarbeitungseinheit (11) zusammenwirkenden Datenspeicher (12);
- wenn (102-y) der Datenspeicher (12) einen solchen Datensatz enthält, beinhaltet das genannte Verfahren:
o einen Schritt (103) des Anforderns der Nichtverteilung des genannten Solldatums (Cₚ) an das Inkassoanwendungsverfahren (A) sowie an die anderen von der Verarbeitungseinheit (11) den genannten Abonnementdienst abonnierten Verfahren;
o einen Schritt (104) des Bewirkens der Implementation einer bestimmten ergänzenden Aktion durch die Verarbeitungseinheit (11), bestehend aus:
▪ Erstellen einer Steuerungsanforderung (Rt) für das genannte Inkassoperipheriegerät (20);
▪ Auslösen des Sendens der genannten Steuerungsanforderung (Rt) durch die Kommunikationsmittel (14) zu dem Peripheriegerät (20), wobei die genannte Anforderung (Rt) Steuerungsdaten (I_{c}) enthält;
o einen Schritt (105) des Anforderns der Verteilung des genannten Solldatums (Cₚ) an das Inkassoanwendungsverfahren (A) und an andere Verfahren durch Anfordern, nach Abschluss der ergänzenden Aktion, eines passenden Dienstes zur Verteilung des genannten Solldatums (Cp) bei der Verarbeitungseinheit.

2. Verfahren (100) nach dem vorherigen Anspruch, für das der Schritt (105) des Anforderns der Verteilung des genannten Solldatums (Cₚ) an das Inkassoanwendungsverfahren darin besteht, zuvor ein neues Solldatum (Cₚ) zu erstellen.

3. Verfahren (100) nach Anspruch 1 oder 2, für das:
- der Datenspeicher (12) eine digitale Darstellung eines vom Benutzer (U) wahrnehmbaren Inhalts umfasst, dessen Ausgabe durch eine Ausgabeschnittstelle (1D), die auch mit der genannten Verarbeitungseinheit (11) zusammenwirkt, an den genannten Benutzer zuvor durch die Implementation des Inkassoanwendungsverfahrens (A) bewirkt wurde;
- der Datensatz des den Wert des Solldatums (Cₚ) enthaltenden Datenspeichers (12) außerdem den Gehalt eines Kontextdatenelements von Interesse (D_{c_I}) umfasst;
- das genannte Verfahren (100) einen Schritt vor Schritt (103) des Anforderns der Nichtverteilung des genannten Solldatums (Cₚ) an das Inkassoanwendungsverfahren beinhaltet, um die jeweiligen Gehalte der digitalen Darstellung des von der Ausgabeschnittstelle (1D) ausgegebenen Inhalts und des Kontextdatenelements von Interesse (D_{c_I}) zu vergleichen, wobei der genannte Schritt (103) des Anforderns der Nichtverteilung nur dann implementiert wird, wenn der genannte Schritt des Vergleichens der genannten Gehalte der genannten digitalen Darstellung und des genannten Kontextdatenelements von Interesse (D_{c_I}) bestätigt, dass diese ähnlich sind.

4. Verfahren (100) nach einem der vorherigen Ansprüche, für das:
- der Programmspeicher (13) für eine oder mehrere ergänzende Aktionen dedizierte Programmbefehle enthält;
- der Schritt (104) des Bewirkens der Implementation einer bestimmten ergänzenden Aktion durch die Verarbeitungseinheit (11) besteht aus:
o Extrahieren, aus dem den Wert des Solldatums (Cₚ) enthaltenden Datensatz, einer Kennung für eine ergänzende Aktion, die die für die genannte bestimmte ergänzende Aktion innerhalb des Programmspeichers (13) dedizierten Programmbefehle designiert;
o Auslösen der Ausführung der genannten Programmbefehle durch die Verarbeitungseinheit (11).

5. Verfahren (100) nach einem der vorherigen Ansprüche, für das der Schritt (104) des Bewirkens der Implementation einer bestimmten ergänzenden Aktion durch die Verarbeitungseinheit (11) außerdem besteht aus:
- Empfangen, über die Kommunikationsmittel (14), einer von dem Inkassoperipheriegerät (20) gesendeten Zustandsmeldung (Mt), wobei die genannte Zustandsmeldung (Mt) den Gehalt von Zustandsdaten (Dₑ) umfasst, die den aktuellen Betriebszustand des genannten Inkassoperipheriegeräts (20) charakterisieren;
- Decodieren der genannten Zustandsmeldung (Mt) und Extrahieren des Gehalts der genannten Zustandsdaten (Dₑ) daraus;
- Auslösen der Ausgabe aller oder eines Teils der genannten Zustandsdaten (Dₑ) durch die Mensch-Maschine-Schnittstelle für Ausgabe (1D) des elektronischen Geräts (10).

6. Computerprogrammprodukt (P2) mit Programmbefehlen, die, wenn sie zuvor in einem Programmspeicher (13) eines elektronischen Geräts (10) gespeichert werden, das außer dem genannten Programmspeicher (13) eine Verarbeitungseinheit (11), einen Datenspeicher (12), eine Mensch-Maschine-Schnittstelle für Ausgabe und Sollwerte (1D) und einen bestimmten Kommunikationsmodus gewährleistende Kommunikationsmittel (14) umfasst, wobei die genannten Speicher (12, 13), die genannte Schnittstelle (1D) und die genannten Kommunikationsmittel (14) mit der genannten Verarbeitungseinheit (11) zusammenwirken, die Implementation eines Verfahrens (100) zum Auslösen ergänzender Aktionen nach einem der Ansprüche 1 bis 5 bewirken.

7. Elektronisches Gerät (10), das eine Verarbeitungseinheit (11), einen Datenspeicher (12), einen Programmspeicher (13), eine Mensch-Maschine-Schnittstelle für Ausgabe und Solldaten (1D) und einen bestimmten Kommunikationsmodus gewährleistende Kommunikationsmittel (14) umfasst, wobei die genannten Speicher (12, 13), die genannte Schnittstelle (1D) und die genannten Kommunikationsmittel (14) mit der genannten Verarbeitungseinheit (11) zusammenwirken, wobei das genannte elektronische Gerät (10) über das Kommunikationsmittel (14) mit einem Inkassoperipheriegerät (20) verbunden ist und ein Inkassoanwendungsverfahren (A) umfasst, das die Kommunikation mit dem Inkassoperipheriegerät (20) nicht unterstützt, **dadurch gekennzeichnet, dass** das genannte elektronische Gerät im Programmspeicher (13) die Befehle eines Computerprogrammprodukts (P2) nach dem vorherigen Anspruch enthält.

8. System, das mindestens ein elektronisches Gerät (10) nach Anspruch 7 umfasst, das mit mindestens einem Inkassoperipheriegerät (20) zusammenwirkt.

## Claims

1. Method (100) for triggering complementary actions implemented by a processing unit (11) of an electronic device (10), said electronic device (10) including a data memory (12), a program memory (13) and a communication means (14) cooperating with the processing unit and providing a determined mode of communication via a communication network (N1), the communication means being connected to a payment collection peripheral (20) in order to cooperate with the processing unit, the processing unit (11) implementing a payment collection application method (A) in order to execute an action in response to the provision of an item of setpoint data (Cₚ) by said processing unit (11), the item of setpoint data (Cₚ) being produced by a setpoint human-machine interface (1D) cooperating with the processing unit (11), said item of setpoint data (Cₚ) expressing an interaction between a user (U) and said interface (1D), the payment collection application method (A) not supporting the communication between said electronic device (10) and the payment collection peripheral (20), said method (100) for triggering complementary actions being **characterized in that** it includes:
- a step (101) for detecting the provision by the processing unit of the item of setpoint data (Cₚ) using a subscription service proposed by the processing unit (11), said subscription service making it possible to provide said item of setpoint data to all the methods subscribed to said subscription service beforehand;
- a step (102) for searching in the data memory (12) cooperating with the processing unit (11), for a record including the value of the item of setpoint data (Cₚ);
- if (102-y) the data memory (12) includes such a record, said method includes:
o a step (103) for requesting the non-distribution of said item of setpoint data (Cₚ) to the payment collection application method (A) as well as to the other methods subscribed to said subscription service by the processing unit (11);
o a step (104) for causing the implementation by the processing unit (11) of a determined complementary action consisting of:
▪ producing a control request (Rt) for said payment collection peripheral (20);
▪ triggering the sending of said control request (Rt) by the communication means (14) to the peripheral (20), said request (Rt) including control data (I_{c});
o a step (105) for requesting the distribution of said item of setpoint data (Cₚ) to the payment collection application method (A) and other methods by requesting an appropriate service for distributing said item of setpoint data (Cp) from the processing unit once the complementary action is finished.

2. Method (100) according to the preceding claim, for which the step (105) for requesting the distribution of said item of setpoint data (Cₚ) to the payment collection application method consists of producing a new item of setpoint data (Cₚ) beforehand.

3. Method (100) according to claim 1 or 2, for which:
- the data memory (12) includes a digital representation of an item of content perceptible by the user (U), the output of which by an output interface (1D) also cooperating with said processing unit (11) to said user was previously caused by the implementation of the payment collection application method (A);
- the record from the data memory (12) including the value of the item of setpoint data (Cₚ) moreover comprises the content of an item of contextual data of interest (D_{c_I});
- said method (100) includes a step prior to the step (103) for requesting the non-distribution of said item of setpoint data (Cₚ) to the payment collection application method, in order to compare the respective contents of the digital representation of the item of content output by the output interface (1D) and of the item of contextual data of interest (D_{c_I}), said step (103) for requesting the non-distribution only being implemented if said step for comparing said contents of said digital representation and of said item of contextual data of interest (D_{c_I}) confirms that the latter are similar.

4. Method (100) according to any one of the preceding claims, for which:
- the program memory (13) includes program instructions dedicated to one or more complementary actions;
- the step (104) for causing the implementation by the processing unit (11) of a determined complementary action consists of:
∘ extracting from the record including the value of the item of setpoint data (Cₚ), a complementary action identifier denoting the program instructions dedicated to said determined complementary action within the program memory (13);
∘ triggering the execution of said program instructions by the processing unit (11).

5. Method (100) according to one of the preceding claims for which the step (104) for causing the implementation by the processing unit (11) of a determined complementary action moreover consists of:
- receiving via the communication means (14), a status message (Mt) sent by the payment collection peripheral (20), said status message (Mt) comprising the status data content (Dₑ) characterizing the current operating status of said payment collection peripheral (20);
- decoding said status message (Mt) and extracting the content of said status data (Dₑ) therefrom;
- triggering the output of all or a portion of said status data (Dₑ) by the human-machine output interface (1D) of the electronic device (10).

6. Computer program product (P2) including program instructions which, when they are stored beforehand in a program memory (13) of an electronic device (10) including in addition to said program memory (13), a processing unit (11), a data memory (12), a human-machine output and setpoint interface (1D) and communication means (14) providing a determined mode of communication, said memories (12, 13), said interface (1D) and said communication means (14) cooperating with said processing unit (11), cause the implementation of a method (100) for triggering complementary actions according to any one of claims 1 to 5.

7. Electronic device (10) including a processing unit (11), a data memory (12), a program memory (13), a human-machine output and setpoint interface (1D) and communication means (14) providing a determined mode of communication, said memories (12, 13), said interface (1D) and said communication means (14) cooperating with said processing unit (11), said electronic device (10) being connected to a payment collection peripheral (20) by the communication means (14) and comprising a payment collection application method (A) that does not support communication with the payment collection peripheral (20), **characterized in that** said electronic device includes, in the program memory (13), the instructions of a computer program product (P2) according to the preceding claim.

8. System including at least one electronic device (10) according to claim 7 cooperating with at least one payment collection peripheral (20).
